# FASCICULE DE BREVET EUROPEEN

(11) **EP 3 505 325 B1**
(45) Date de publication et mention de la délivrance du brevet: **23.09.2020**
(21) Numéro de dépôt: 18215907.9
(22) Date de dépôt: 26.12.2018
(51) Int. Cl.: B29C 45/14, B29C 45/26, B29L 31/00

(54) **SUPPORT D'INSERT POUR MOULE D'INJECTION D'UN BAC DE COLLECTE**
EINSATZHALTERUNG FÜR EINSPRITZFORM EINES SAMMELBECKENS
SUPPORT FOR INSERT FOR INJECTION MOULD OF A COLLECTION CONTAINER

(30) Priorité: 27.12.2017 FR 1763246
(43) Date de publication de la demande: 03.07.2019
(73) Titulaire: SULO France, 69800 Saint-Priest (FR)
(72) Inventeur: PECHINE, Jean-Benoît, 52600 Le Pailly (FR); GIROD, Laurent, 52200 Langres (FR); ALLANCHE, Etienne, 69008 Lyon (FR)
(74) Mandataire: LLR

(56) Documents cités:
- DE-T2- 69 919 101
- DE-T2- 69 919 101
- FR-A1- 2 806 343
- US-A1- 2008 129 514

## Description

L'invention concerne la fabrication de conteneurs de collecte de déchets, et concerne plus particulièrement un procédé de fabrication d'un conteneur en matière plastique muni d'un dispositif électronique d'identification à lecture par ondes radio, tel qu'une puce RFID.

On entend par puce RFID l'ensemble des sous éléments suivants : puce (fréquences de 13,56 à 125Hz), antenne. Ces puces RFID sont noyées dans des résines/matières et étant perméables aux ondes.

Les conteneurs de collecte de déchet en matière plastique, dont le volume utile est compris aujourd'hui entre 60 litres et plus de 1100 litres, sont constitués principalement d'une cuve comportant une paroi de fond et des parois latérales. La cuve est en général pourvue d'un couvercle (souvent de type pivotant), et équipée de deux ou quatre roues dans le cas d'un conteneur roulant.

La cuve est conventionnellement obtenue par moulage par injection d'une matière plastique. La matière plastique chaude est injectée par l'intermédiaire d'une ou plusieurs buses disposées au niveau du fond de la cuve, le moule étant à température régulée.

Par ailleurs, on connait des bacs de collecte munis d'un dispositif d'identification à l'aide d'un dispositif électronique à lecture par ondes radio et un support destiné à recevoir un tel dispositif. On connaît, notamment du document EP0412020, un procédé d'identification de bacs de collecte à l'aide d'étiquettes électroniques à lecture par ondes radio. De telles étiquettes sont aussi désignées « transpondeurs » ou encore « puces RFID » (de l'Anglais Radio Frequency IDentification).

Ces puces RFID donnent la possibilité d'assurer la traçabilité du bac lors des collectes et permettent aux collectivités de facturer la collecte des déchets aux particuliers. Cette puce RFID étant en lecture/écriture cela permets également d'avoir un suivi de la maintenance et des collectes du bac. La tarification incitative se développant fortement, de plus en plus de bacs sont aujourd'hui équipés d'une puce RFID. La puce RFID est associée à un utilisateur, ce qui permet de générer la facture liée à la collecte.

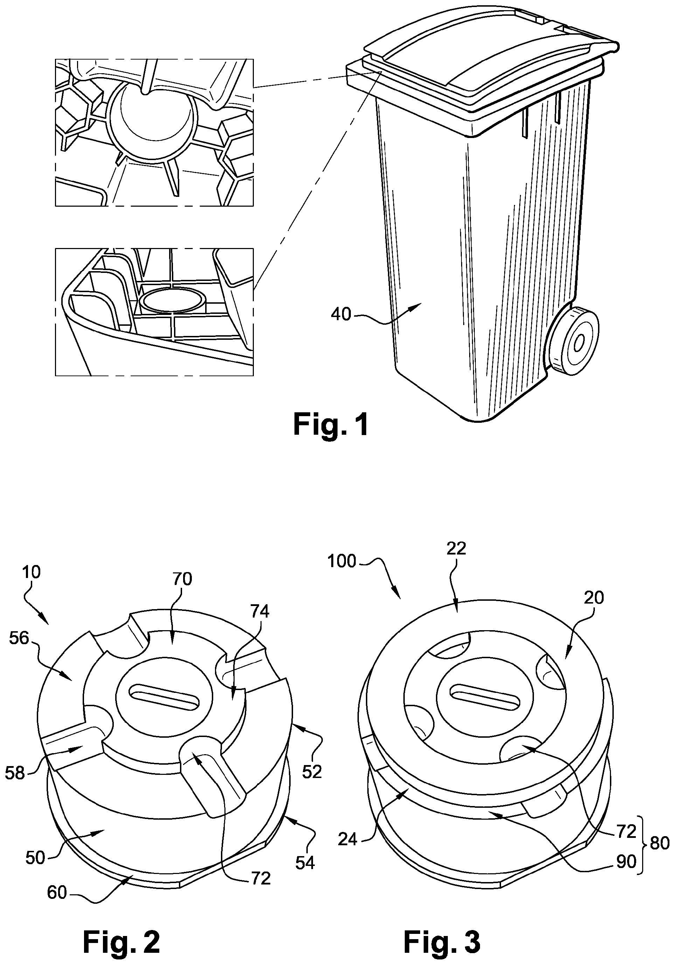

Comme illustré sur la figure 1, une puce RFID est généralement située en face avant du bac, pour être aisément lue à l'aide d'une antenne positionnée sur le peigne d'un système de levage/vidage du moyen de collecte.

L'emplacement de la puce RFID est normalisé car la lecture de la puce est effectuée par le moyen de levage lors de la collecte du bac : la distance de lecture est volontairement limitée afin de ne pas être en interférence avec d'autres ondes lors de la collecte, et idéalement l'antenne de lecture est située sur le peigne des moyens de collecte. La figure 1 illustre cet emplacement normalisé. Ces puces RFID sont de taille réduite pour pouvoir être implantées sous les collerettes des bacs.

Pour équiper un bac d'un tel dispositif électronique à lecture par ondes radio, les bacs sont d'abord injectés dans une cellule robotisée, puis les puces RFID sont montées en pied de presse ou dans l'atelier à l'aide d'une visseuse par un opérateur. La puce RFID actuellement utilisée est montée manuellement en pied de presse après le cycle d'injection ou en zone de reprise par un opérateur à l'aide d'une visseuse. La puce RFID peut également être montée en force.

Pour ce faire, L'outillage d'injection est conçu pour accueillir une puce RFID de forme ronde qui est maintenue au bac à l'aide de nervures que l'on vient « écraser » lors du vissage ou du montage en force. Ces nervures assurent la bonne tenue de la puce RFID lors de l'utilisation du bac.

Le document FR 2806 343 divulgue un moule pour moulage par injection avec des nervures discontinues qui sont arrangées en forme annulaire sur la face de cavité. Sur ces nervures il est possible d'arranger un insert annulaire. Les nervures discontinues rendent le passage du courant de matière injectée possible par cet insert annulaire et ainsi d'enrober des régions de l'insert annulaire.

Une opération d'assemblage supplémentaire est donc nécessaire. Ceci est également le cas pour les puces RFID du type étiquettes. De plus, comme toute opération manuelle, il existe un risque d'oubli de montage du composant. Enfin, le coût de l'opération de montage est largement supérieur à celui du coût de la puce RFID.

L'invention a pour but de remédier à ces inconvénients en fournissant un support pour insert, tel qu'une puce RFID, apte surmouler l'insert en le maintenant en position dans la cavité de moulage, et apte à surmouler les deux faces de l'insert.

Ainsi, l'objet de l'invention concerne un support d'insert pour moule d'injection d'un bac de collecte. Le support comprend un corps principal muni à une première extrémité d'un moyen de fixation du corps au moule, à une seconde extrémité d'un moyen de maintien de l'insert sur le corps, le moyen de maintien étant équipé d'un système apte à conduire une matière injectée depuis une première surface de l'insert, vers une seconde surface de l'insert opposée à la première surface.

Un tel support, permet une automatisation de l'opération de montage de la puce RFID sur le bac. Ce support permet donc de s'affranchir d'étapes d'assemblage supplémentaires, couteuses, sans impliquer de modification de la géométrie des bacs ni de modifications importantes des outillages d'injection.

L'automatisation du montage de la puce RFID permet de s'affranchir de l'opération de reprise manuelle après l'injection. Cela représente donc un gain financier et la suppression du risque d'oubli.

De plus le démontage de la puce RFID pour « échange » ou vole est rendu très compliqué voire impossible grâce au système d'accroche de la puce RFID au bac : la géométrie du moyen de maintien de l'insert sur le corps permet d'assurer le bon positionnement de l'insert, en lui évitant d'être emporté par le flux de matière lors de l'injection, mais également le maintien de l'insert au bac une fois l'injection terminée (surmoulage des deux faces).

Il en résulte un gain de temps, un gain financier, et une limitation du risque de mauvaise fabrication (oubli, mauvais positionnement de la puce...).

Le support étant interchangeable, différentes géométries et tailles de puces peuvent être utilisées pour un même outillage d'injection.

Enfin, le support ne comprime pas la puce RFID, il n'y a donc pas d'endommagements/détérioration possibles de la puce RFID lors de l'opération de surmoulage.

Le support peut en outre comporter l'une ou plusieurs des caractéristiques suivantes, prises seules ou en combinaison :
- le corps forme sensiblement un cylindre, dont la première extrémité est adaptée à s'emboiter dans une forme complémentaire du moule ;
- le moyen de maintien est un tenon saillant à la surface de la seconde extrémité formant un épaulement ;
- le tenon est configuré pour recevoir l'insert de sorte qu'un volume est ménagé entre l'épaulement et l'insert ;
- le tenon comporte au moins un canal formant une rainure verticale sur les flancs du tenon, le canal étant apte à conduire une matière injectée depuis la surface supérieure du tenon vers le volume ;
- l'épaulement est muni de canaux radiaux communiquant avec le canal du tenon.

L'invention concerne également un ensemble d'un insert et d'un support selon l'invention.

Cet ensemble peut en outre comporter l'une ou plusieurs des caractéristiques suivantes, prises seules ou en combinaison :
- le système est apte à conduire une matière injectée depuis une première surface de l'insert vers une seconde surface de l'insert opposée à la première surface ;
- le moyen de maintien est un tenon saillant à la surface de la seconde extrémité formant un épaulement, et l'insert est maintenu sur le support en ménageant un volume entre l'épaulement et l'insert ;
- l'insert est un dispositif électronique à lecture par ondes radio, par exemple une puce RFID ;
- le corps forme sensiblement un cylindre, le moyen de maintien est un tenon saillant à la surface de la seconde extrémité, et l'insert a une forme en anneau dont le diamètre extérieur est identique à celui du cylindre du corps, et dont le diamètre intérieur est identique à celui du tenon.

L'invention concerne également un ensemble d'un moule et d'un ensemble d'un insert et d'un support selon l'invention, dans lequel le support est emboité dans une forme complémentaire du moule.

Le moule peut comporter une cavité de moulage, et le système est apte à conduire une matière injectée depuis une première surface de l'insert en regard de la cavité de moulage, vers une seconde surface de l'insert opposée à la première surface.

Le moule peut comporter une cavité de moulage, et le volume en connexion avec la chambre de moulage forme une sous cavité de moulage permettant de surmouler la face de l'insert opposée à la cavité de moulage.

L'invention concerne également un procédé d'injection plastique pour la fabrication d'une cuve de conteneur de collecte de déchets muni d'un dispositif électronique à lecture par ondes radio dans un logement sous une collerette supérieure de la cuve, dans lequel on utilise un moule d'injection. Le procédé comporte les étapes suivantes :
- mise en place d'un dispositif électronique à lecture par ondes radio sur un support selon l'une des revendications 1 à 6 ;
- mise en place du support dans le moule ;
- fermeture du moule ;
- injection de matière plastique au niveau d'au moins un point d'injection dans la cavité de moulage ;
- ouverture du moule.

L'invention sera mieux comprise à la lecture des figures annexées, qui sont fournies à titre d'exemples et ne présentent aucun caractère limitatif, dans lesquelles :
- la figure 1 illustre un bac de collecte de déchet, ainsi que l'emplacement normalisé d'une puce RFID sous la collerette du bac ;
- la figure 2 illustre un exemple de support d'insert selon l'invention ;
- la figure 3 illustre un exemple d'un ensemble selon l'invention, comportant un support d'insert et un insert ;
- la figure 4 illustre un exemple d'un ensemble selon l'invention, comportant un moule d'injection, un support d'insert et un insert ;
- La figure 5 illustre le résultat du procédé de moulage selon l'invention, et notamment un insert surmoulé sous la collerette du bac.

On se réfère maintenant à la figure 2, qui illustre un support 10 d'insert 20 pour moule 30 d'injection d'un bac 40 de collecte selon l'invention.

Le support 10 comprend un corps principal 50 muni à une première extrémité 52 d'un moyen de fixation 60 du corps 50 au moule 30.

Le corps 50 comprend une seconde extrémité 54, opposée à la première extrémité 52. Cette seconde extrémité 54 est destinée à être en contact avec la cavité de moulage du moule 30 d'injection.

La seconde extrémité 54 est munie d'un moyen de maintien 70 de l'insert 20 sur le corps 50.

Enfin, le moyen de maintien 70 est équipé d'un système 80 apte à conduire une matière injectée depuis une première surface 22 de l'insert 20, vers une seconde surface 24 de l'insert 20 opposée à la première surface.

Le **support 10 d'insert** 20 permet ainsi de mouler les deux faces d'un insert 20, maintenu sur le support 10.

Nous allons maintenant décrire un exemple de réalisation particulier, en se référant aux figures 2 à 5.

Selon un exemple illustré sur les figures 2 et 3, le corps 50 forme sensiblement un cylindre, dont la première extrémité 52 est adaptée à s'emboiter dans une forme 34 complémentaire d'un moule 30. Cet emboitement permet une fixation du corps 50 sur un moule, de façon simple et réversible. Bien évidemment, l'invention n'est pas limitée à ce mode de fixation.

La seconde extrémité 54 du cylindre 50 est destinée à être dans la cavité de moulage 32 du moule 30. C'est donc au niveau de cette seconde extrémité que la matière injectée arrive, et surmoule l'insert 20.

Ainsi, la seconde extrémité 54 est munie du moyen de maintien 70, qui est, selon l'exemple de réalisation décrit sur les figures, un tenon saillant à la surface de la seconde extrémité 54 formant un épaulement 56. En effet, le cylindre 50 et le tenon 70 sont ainsi séparés par un épaulement 56.

Le tenon 70 forme un moyen de maintien 70 simple de l'insert 20. Là encore, l'invention n'est pas limitée à ce mode de maintien. A cette fin, le tenon 70 est configuré pour recevoir l'insert 20, ce dernier venant s'enserrer autours du tenon 70 de sorte que l'insert ne puisse pas bouger lors de l'injection de la matière plastique dans la cavité de moulage 32 du moule 30.

La géométrie du tenon 70 permet d'assurer le bon positionnement l'insert 20 en lui évitant d'être emporté par le flux de matière lors de l'injection. Pour rappel, sur un bac de 120L le temps d'injection est d'environ 6s, les flux matières sont donc extrêmement rapide et la pression dans l'outillage au niveau de la zone de la puce avoisine les 200bar.

L'insert 20 vient s'enserrer autours du tenon 70 de façon à ce qu'un volume 90 soit ménagé entre l'épaulement 56 et l'insert 20.

Ce volume 90 permet le moulage de la seconde face de l'insert 20 comme expliqué ci-après.

L'insert 20 comporte une première face 22 en contact direct avec la cavité de moulage 32 lorsque l'insert 20 est maintenu sur le support 10, et lorsque le support 10 est placé dans le moule 30.

Cette face 22 est donc surmoulée dans la cavité de moulage 32. Cependant, l'insert 20 comporte une seconde face 24, opposée à la première surface, qui n'est pas en contact direct avec la cavité de moulage 32. Cette seconde face 24 est en contact avec le volume 90.

Afin de surmouler cette seconde face 24, il est donc nécessaire d'équiper le support 10 d'un système 80 apte à conduire la matière injectée dans la cavité de moulage 32 depuis la première surface 22 de l'insert 20, vers la seconde surface 24 de l'insert 20.

Selon l'exemple de réalisation décrit sur les figures, le système 80 comporte au moins un canal 72 porté par le tenon 70. Ce canal 72 forme une rainure verticale sur les flancs du tenon 70, et il est apte à conduire la matière injectée depuis la surface supérieure 74 du tenon 70 vers le volume 90. Ainsi, même lorsque l'insert 20 enserre le tenon 70, une des extrémités du canal 72 forme une ouverture à la surface du tenon 70 en contact avec la cavité de moulage 32. De cette façon, la matière injectée dans la cavité pénètre dans cette ouverture, coule dans le canal 72 jusqu'au volume 90.

Le volume 90 forme alors une seconde cavité de moulage, permettant de surmouler la surface 24 de l'insert 20 qui n'est pas en contact avec la cavité de moulage 32 du moule 30.

Le volume 90 est défini d'un côté par l'épaulement 56, c'est-à-dire la surface de l'extrémité du corps 50. Du côté opposé, le volume 90 est limité par la surface 24 de l'insert. Sur les côté, le volume 90 est limité par les parois du moule 30.

Selon un exemple de réalisation avantageux illustré sur les figures, l'épaulement 56, est muni de canaux radiaux 58 communiquant avec le canal 72 du tenon 70.

**L'invention concerne également un ensemble 100** (figure 3) d'un insert 20 et d'un support 10 selon l'invention.

Selon un mode de réalisation, l'insert 20 a une forme en anneau (ou de bague) dont le diamètre extérieur est identique à celui du cylindre du corps 50, et dont le diamètre intérieur est identique au diamètre extérieur du tenon 70.

Selon un mode de réalisation, l'insert 20 est un dispositif électronique à lecture par ondes radio. L'insert 20 peut notamment être une puce RFID.

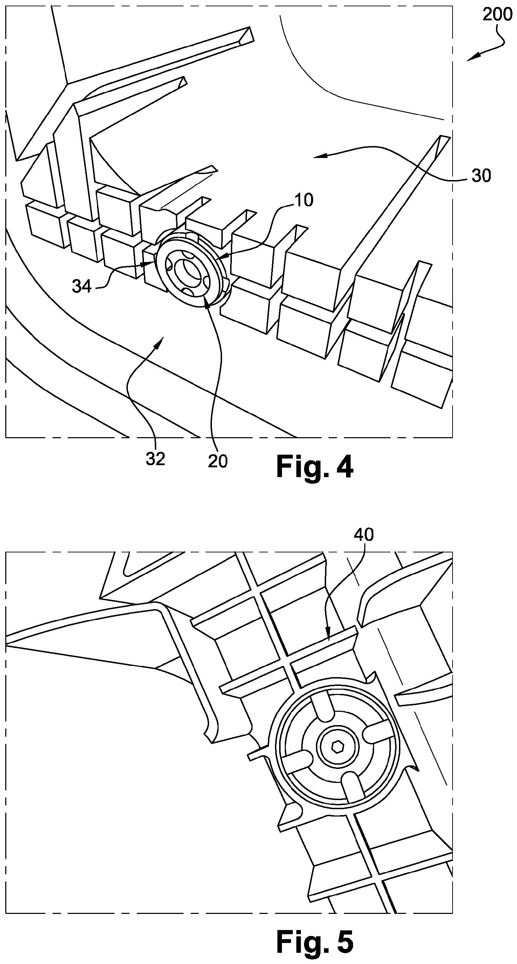

**L'invention concerne également un ensemble 200** (figure 4) comprenant un moule 30 et un ensemble 100 selon l'invention, dans lequel le support 10 est emboité dans une forme 34 complémentaire du moule 30. Cet emboitement permet une fixation du corps 50 sur un moule, de façon simple et réversible. Bien évidemment, l'invention n'est pas limitée à ce mode de fixation.

Comme décrit précédemment, le moule 30 comporte une cavité de moulage 32, et le système 80 est apte à conduire une matière injectée depuis la cavité de moulage 32 vers le volume 90, en contact avec la seconde surface 24 de l'insert. Le volume 90 formant dans cet ensemble 200 une sous cavité de moulage permettant de surmouler la face 24 de l'insert opposée à la cavité de moulage 32.

**L'invention concerne également un procédé d'injection plastique** pour la fabrication d'une cuve de conteneur de collecte de déchets muni d'un dispositif électronique à lecture par ondes radio, du type puce RFID par exemple, dans un logement sous une collerette supérieure de la cuve, dans lequel on utilise un moule d'injection 30.

Le procédé comporte les étapes suivantes :
- mise en place d'un dispositif 20 électronique à lecture par ondes radio sur un support 10 selon l'invention ; on obtient ainsi un ensemble 100 selon l'invention ;
- mise en place du support 10 dans le moule 30 ; on obtient ainsi un ensemble 200 selon l'invention ;
- fermeture du moule ;
- injection de matière plastique au niveau d'au moins un point d'injection dans la cavité de moulage 32 ;
- ouverture du moule.

La figure 5 illustre le résultat du procédé de moulage selon l'invention, et notamment un insert 20 surmoulé sous la collerette du bac 40.

### NOMENCLATURE

- 10: : support d'un insert à surmouler
- 20: : insert à surmouler
- 22: : première surface de l'insert 20 en contact avec la cavité de moulage 32 du moule
- 24: : seconde surface de l'insert 20 opposée à la première surface.
- 30: : moule d'injection
- 32: : cavité de moulage du moule 30
- 34: : forme du moule 30, complémentaire avec le moyen de fixation du corps 50 au moule 30
- 40: : bac de collecte
- 50: : corps principal du support 10
- 52: : première extrémité du corps 50
- 54: : seconde extrémité du corps 50, opposée à l'extrémité 52 et destinée à être en contact avec la cavité de moulage 32 du moule 30
- 56: : épaulement entre la seconde extrémité 54 du corps 50 et le tenon 70
- 58: : canaux radiaux 58 de l'épaulement 56, communiquant avec le canal 72 du tenon 70.
- 60: : moyen de fixation du corps 50 au moule 30
- 70: : moyen de maintien de l'insert 20 sur le corps 50
- 72: : canal du système 80 porté par le tenon 70
- 74: : surface supérieure 74 du tenon 70, en contact avec la cavité de moulage 32
- 80: : système apte à conduire une matière injectée depuis la première surface 22 de l'insert 20, vers la seconde surface 24 de l'insert 20 opposée à la première surface.
- 90: : volume ménagé entre l'épaulement 56 et l'insert 20, permettant le surmoulage de la seconde face 24 de l'insert 20
- 100: : ensemble d'un insert 20 et d'un support 10 selon l'invention.
- 200: : ensemble comprenant un moule 30 et un ensemble 100

## Revendications

1. **Support (10) d'insert** (20) pour moule (30) d'injection d'un bac (40) de collecte, caractérisé en que qu'il comprend un corps principal (50) muni à une première extrémité (52) d'un moyen de fixation (60) du corps au moule (30), à une seconde extrémité (54) d'un moyen de maintien (70) de l'insert (20) sur le corps (50), le moyen de maintien (70) étant équipé d'un système (80) apte à conduire une matière injectée depuis une première surface (22) de l'insert (20), vers une seconde surface (24) de l'insert (20) opposée à la première surface.

2. Support (10) selon la revendication 1, dans lequel le corps (50) forme sensiblement un cylindre, dont la première extrémité (52) est adaptée à s'emboiter dans une forme (32) complémentaire du moule (30).

3. Support (10) selon l'une des revendications précédentes, dans lequel le moyen de maintien (70) est un tenon saillant à la surface de la seconde extrémité (54) formant un épaulement (56).

4. Support (10) selon la revendication précédente, dans lequel le tenon (70) est configuré pour recevoir l'insert (20) de sorte qu'un volume (90) est ménagé entre l'épaulement (56) et l'insert (20).

5. Support (10) selon la revendication précédente, dans lequel le tenon (70) comporte au moins un canal (72) formant une rainure verticale sur les flancs du tenon, le canal (72) étant apte à conduire une matière injectée depuis la surface supérieure (74) du tenon (70) vers le volume (90).

6. Support (10) selon la revendication précédente, dans lequel l'épaulement (56) est muni de canaux radiaux (58) communiquant avec le canal (72) du tenon (70).

7. **Ensemble (100) d'un insert (20) et d'un support (10)** selon l'une des revendications précédentes.

8. Ensemble (100) selon la revendication précédente, dans lequel le système (80) est apte à conduire une matière injectée depuis une première surface (22) de l'insert (20) vers une seconde surface (24) de l'insert opposée à la première surface.

9. Ensemble (100) selon la revendication précédente, dans lequel le moyen de maintien (70) est un tenon saillant à la surface de la seconde extrémité (54) formant un épaulement (56), et l'insert (20) est maintenu sur le support (10) en ménageant un volume (90) entre l'épaulement (56) et l'insert (20).

10. Ensemble (100) selon l"une des revendications précédentes, dans lequel l'insert (20) est un dispositif électronique à lecture par ondes radio, par exemple une puce RFID.

11. Ensemble (100) selon l'une des revendications précédentes, dans lequel le corps (50) forme sensiblement un cylindre, le moyen de maintien (70) est un tenon saillant à la surface de la seconde extrémité (54), et l'insert (20) a une forme en anneau dont le diamètre extérieur est identique à celui du cylindre du corps (50), et dont le diamètre intérieur est identique à celui du tenon (70).

12. **Ensemble (200) d'un moule (30) et d'un ensemble (100)** selon l'une des revendications 7 à 11, dans lequel le support (10) est emboité dans une forme (32) complémentaire du moule (30).

13. Ensemble (200) selon la revendication précédente, dans lequel le moule comporte une cavité de moulage, et le système (80) est apte à conduire une matière injectée depuis une première surface de l'insert en regard de la cavité de moulage, vers une seconde surface de l'insert opposée à la première surface.

14. Ensemble (200) selon la revendication précédente, dans lequel le moule (30) comporte une cavité de moulage (32), et le volume (90) en connexion avec la chambre de moulage (32) forme une sous cavité de moulage permettant de surmouler la face (24) de l'insert opposée à la cavité de moulage (32).

15. **Procédé d'injection plastique** pour la fabrication d'une cuve de conteneur de collecte de déchets muni d'un dispositif électronique à lecture par ondes radio dans un logement sous une collerette supérieure de la cuve, dans lequel on utilise un moule d'injection, le procédé étant **caractérisé en ce qu'**il comporte les étapes suivantes :
- mise en place d'un dispositif électronique à lecture par ondes radio sur un support (10) selon l'une des revendications 1 à 6 ;
- mise en place du support (10) dans le moule (30) ;
- fermeture du moule ;
- injection de matière plastique au niveau d'au moins un point d'injection dans la cavité de moulage ;
- ouverture du moule.

## Patentansprüche

1. **Träger (10) eines Einsatzes** (20) für eine Spritzgussform (30) eines Sammelbehälters (40), **dadurch gekennzeichnet, dass** er einen Hauptkörper (50) umfasst, der an einem ersten Ende (52) mit einem Mittel zur Befestigung (60) des Körpers an der Form (30), an einem zweiten Ende (54) mit einem Mittel zum Halten (70) des Einsatzes (20) auf dem Körper (50) versehen ist, wobei das Haltemittel (70) mit einem System (80) ausgestattet ist, das in der Lage ist, ein eingespritztes Material von einer ersten Oberfläche (22) des Einsatzes (20) zu einer zweiten Oberfläche (24) des Einsatzes (20) gegenüber der ersten Oberfläche zu leiten.

2. Träger (10) nach Anspruch 1, wobei der Körper (50) im Wesentlichen einen Zylinder bildet, dessen erstes Ende (52) so angepasst ist, dass es in eine komplementäre Form (32) der Form (30) passt.

3. Träger (10) nach einem der vorhergehenden Ansprüche, wobei das Haltemittel (70) ein Zapfen ist, der von der Oberfläche des zweiten Endes (54) vorsteht und eine Schulter (56) bildet.

4. Träger (10) nach dem vorhergehenden Anspruch, wobei der Zapfen (70) so konfiguriert ist, dass er den Einsatz (20) aufnimmt, so dass ein Volumen (90) zwischen der Schulter (56) und dem Einsatz (20) entsteht.

5. Träger (10) nach dem vorhergehenden Anspruch, wobei der Zapfen (70) mindestens einen Kanal (72) aufweist, der eine vertikale Nut an den Flanken des Zapfens bildet, wobei der Kanal (72) in der Lage ist, eingespritztes Material von der oberen Oberfläche (74) des Zapfens (70) zum Volumen (90) zu leiten.

6. Träger (10) nach dem vorhergehenden Anspruch, wobei die Schulter (56) mit radialen Kanälen (58) versehen ist, die mit dem Kanal (72) des Zapfens (70) in Verbindung stehen.

7. **Anordnung (100) aus einem Einsatz (20) und einem Träger (10)** nach einem der vorhergehenden Ansprüche.

8. Anordnung (100) nach dem vorhergehenden Anspruch, wobei das System (80) dazu geeignet ist, eingespritztes Material von einer ersten Oberfläche (22) des Einsatzes (20) zu einer zweiten Oberfläche (24) des Einsatzes gegenüber der ersten Oberfläche zu leiten.

9. Anordnung (100) nach dem vorhergehenden Anspruch, wobei das Haltemittel (70) ein Zapfen ist, der von der Oberfläche des zweiten Endes (54) vorsteht und eine Schulter (56) bildet, und wobei der Einsatz (20) auf dem Träger (10) gehalten wird, indem ein Volumen (90) zwischen der Schulter (56) und dem Einsatz (20) entsteht.

10. Anordnung (100) nach einem der vorhergehenden Ansprüche, wobei der Einsatz (20) ein elektronisches Funkwellenlesegerät, beispielsweise ein RFID-Chip, ist.

11. Anordnung (100) nach einem der vorhergehenden Ansprüche, wobei der Körper (50) im Wesentlichen einen Zylinder bildet, wobei das Haltemittel (70) ein Zapfen ist, der von der Oberfläche des zweiten Endes (54) vorsteht, und wobei der Einsatz (20) eine Ringform hat, deren Außendurchmesser derselbe wie der des Zylinders des Körpers (50) ist und deren Innendurchmesser derselbe wie der des Zapfens (70) ist.

12. **Anordnung (200) aus einer Form (30) und einer Anordnung (100)** nach einem der Ansprüche 7 bis 11, wobei der Träger (10) in einer zur Form (30) komplementären Form (32) eingepasst ist.

13. Anordnung (200) nach dem vorhergehenden Anspruch, wobei die Form einen Formhohlraum aufweist und wobei das System (80) in der Lage ist, ein eingespritztes Material von einer ersten Oberfläche des Einsatzes, die dem Formhohlraum zugewandt ist, zu einer zweiten Oberfläche des Einsatzes gegenüber der ersten Oberfläche zu leiten.

14. Anordnung (200) nach dem vorhergehenden Anspruch, wobei die Form (30) einen Formhohlraum (32) aufweist und wobei das Volumen (90) in Verbindung mit dem Formhohlraum (32) einen Unterformhohlraum zum Umspritzen der Oberfläche (24) des Einsatzes gegenüber dem Formhohlraum (32) bildet.

15. **Kunststoffeinspritzverfahren** zum Herstellen eines Abfallsammelbehälters, der mit einem elektronischen Funkwellenlesegerät in einem Gehäuse unter einem oberen Kragen des Behälters versehen ist, wobei eine Spritzgussform verwendet wird, **dadurch gekennzeichnet, dass** das Verfahren die folgenden Schritte umfasst:
- Anbringen eines elektronischen Funkwellenlesegeräts auf einem Träger (10) nach einem der Ansprüche 1 bis 6;
- Platzieren des Trägers (10) in der Form (30);
- Schließen der Form;
- Einspritzen von Kunststoffmaterial an mindestens einem Einspritzpunkt in den Formhohlraum;
- Öffnen der Form.

## Claims

1. **Support (10) for an insert** (20) for a mold (30) for injection molding a collection receptacle (40), **characterized in that** it comprises a main body (50) provided, at a first end (52), with a means (60) for fixing the body to the mold (30) and, at a second end (54), with a means (70) for holding the insert (20) on the body (50), the holding means (70) being equipped with a system (80) capable of conducting an injected material from a first surface (22) of the insert (20) toward a second surface (24) of the insert (20) that is opposite the first surface.

2. Support (10) according to claim 1, wherein the body (50) substantially forms a cylinder of which the first end (52) is adapted so as to fit into a structure (32) that is complementary to the mold (30).

3. Support (10) according to either of the preceding claims, wherein the holding means (70) is a lug projecting from the surface of the second end (54) acting as a shoulder (56).

4. Support (10) according to the preceding claim, wherein the lug (70) is designed to receive the insert (20) such that a space (90) is formed between the shoulder (56) and the insert (20).

5. Support (10) according to the preceding claim, wherein the lug (70) comprises at least one channel (72) which forms a vertical groove in the edge of the lug, the channel (72) being capable of conducting an injected material from the upper surface (74) of the lug (70) toward the space (90).

6. Support (10) according to the preceding claim, wherein the shoulder (56) is provided with radial channels (58) which communicate with the channel (72) in the lug (70).

7. **Assembly (100) consisting of an insert (20) and a support (10)** according to any of the preceding claims.

8. Assembly (100) according to the preceding claim, wherein the system (80) is capable of conducting an injected material from a first surface (22) of the insert (20) toward a second surface (24) of the insert that is opposite the first surface.

9. Assembly (100) according to the preceding claim, wherein the holding means (70) is a lug projecting from the surface of the second end (54) acting as a shoulder (56), and the insert (20) is held on the support (10) by a space (90) being formed between the shoulder (56) and the insert (20).

10. Assembly (100) according to any of the preceding claims, wherein the insert (20) is an electronic device to be read by radio waves, for example a RFID chip.

11. Assembly (100) according to any of the preceding claims, wherein the body (50) substantially forms a cylinder, the holding means (70) is a lug projecting from the surface of the second end (54), and the insert (20) has an annular shape of which the outer diameter is the same as that of the cylinder of the body (50), and of which the inner diameter is the same as that of the lug (70).

12. **Assembly (200) consisting of a mold (30) and an assembly (100)** according to any of claims 7 to 11, wherein the support (10) is fitted into a structure (32) that is complementary to the mold (30).

13. Assembly (200) according to the preceding claim, wherein the mold comprises a molding cavity, and the system (80) is capable of conducting an injected material from a first surface of the insert that faces the molding cavity toward a second surface of the insert that is opposite the first surface.

14. Assembly (200) according to the preceding claim, wherein the mold (30) comprises a molding cavity (32), and the space (90) in connection with the molding chamber (32) forms a molding sub-cavity which makes it possible to overmold the surface (24) of the insert that is opposite the molding cavity (32).

15. **Plastics injecting molding process** for manufacturing a vessel of a waste collection container provided with an electronic device to be read by radio waves in a housing under an upper collar of the vessel, wherein an injection mold is used, the method being **characterized in that** it comprises the following steps:
- placing an electronic device to be read by radio waves on a support (10) according to any of claims 1 to 6;
- placing the support (10) in the mold (30);
- closing the mold;
- injecting plastics material into the molding cavity at at least one injection point;
- opening the mold.
